# EUROPEAN PATENT APPLICATION

(11) **EP 4 250 801 A1**
(43) Date of publication of application: **27.09.2023**
(21) Application number: 21908936.4
(22) Date of filing: 15.11.2021
(51) Int. Cl.: H04W 24/02, H04W 52/02

(54) **RADIO LINK MONITORING METHOD AND APPARATUS, WIRELESS TERMINAL, AND STORAGE MEDIUM**

(30) Priority: 21.12.2020 CN 202011521547
(71) Applicant: GUANGDONG OPPO MOBILE TELECOMMUNICATIONS CORP., LTD., Dongguan, Guangdong 523860 (CN)
(72) Inventor: XU, Chaojie, Dongguan, Guangdong 523860 (CN)
(74) Representative: Penza, Giancarlo
(86) International application number: PCT/CN2021/130696
(87) International publication number: WO 2022/134936

(57) **Abstract**

The present application relates to the technical field of terminals, and provides a radio link monitoring method and apparatus, a wireless terminal, and a storage medium. The method comprises: determining first monitoring information and second monitoring information, the first monitoring information comprising information of a beacon frame of a first radio link, and the second monitoring information comprising information of a beacon frame of a second radio link; and on the basis of the first monitoring information and the second monitoring information, reducing the monitoring efficiency of at least one of the first radio link and the second radio link monitoring the beacon frame. By means of the solution, for a wireless terminal comprising two radio links, the monitoring efficiency of at least one radio link monitoring the beacon frame is reduced on the basis of the monitoring information of the two radio links monito1ing beacon frames, such that the number of times of the wireless terminal monitoring the beacon frames can be reduced, and thus the power consumption of the wireless terminal monitoring the beacon frames is reduced.

## Description

This application claims the priority of China Patent Application No. 202011521547.8 filed on Dec. 21, 2020, with the title "RADIO LINK MONITORING METHOD AND APPARATUS, WIRELESS TERMINAL, AND STORAGE MEDIUM", the entire contents of which are incorporated into this application by reference.

### TECHNICAL FIELD

Embodiments of the present disclosure relates to the technical field of terminals, in particular to a method and an apparatus for monitoring radio links, a wireless terminal and a storage medium.

### BACKGROUND

In order to improve the throughput of radio links and reduce network latency in wireless terminals, a dual-band Wi-Fi acceleration method is usually adopted to enable the wireless terminal to connect to two access points (APs) simultaneously. After the wireless terminal is connected to a router in the local area network (LAN), the wireless terminal and the router do not need to exchange data for most of the time. During the time when there is no data exchange between the wireless terminal and the router, the router periodically sends beacons to the wireless terminal. The beacon is used to indicate whether the router has downlink data to be sent to the wireless terminal. Therefore, in order to save power, the radio links of the wireless terminal are always in a power save state, and only when the beacon indicating that the router has the downlink data to be sent to the wireless terminal is monitored, the wireless terminal wakes up the radio link corresponding to the beacon to exchange data with the router based on that radio link.

### SUMMARY

The present disclosure provides a method for monitoring radio links, an apparatus for monitoring radio links, a wireless terminal and a storage medium, which can reduce the power consumption of radio links of the wireless terminal. The technical solutions are as follows.

In an aspect, a method for monitoring radio links in a wireless terminal is provided, and the method includes:
determining first monitoring information and second monitoring information, the first monitoring information including beacon information of a first radio link and the second monitoring information including beacon information of a second radio link; and
reducing, based on the first monitoring information and the second monitoring information, a monitoring frequency of monitoring beacons of at least one radio link in the first radio link and the second radio link.

In another aspect, an apparatus for monitoring radio links in a wireless terminal is provided, and the apparatus includes:
a monitoring information determining module, configured to determine first monitoring information and second monitoring information, the first monitoring information including beacon information of a first radio link and the second monitoring information including beacon information of a second radio link; and
a monitoring frequency adjusting module, configured to reduce, based on the first monitoring information and the second monitoring information, a monitoring frequency of monitoring beacons of at least one radio link in the first radio link and the second radio link.

In another aspect, a wireless terminal is provided, the wireless terminal includes a processor and a memory. The memory stores at least one program code, which is configured to be executed by the processor to implement the method for monitoring radio links described above.

In another aspect, a computer-readable storage medium is provided, the computer-readable storage medium stores at least one program code, which is configured to be executed by a processor to implement the method for monitoring radio links described above.

In another aspect, a computer program product is provided, the computer program product stores at least one program code, and the at least one program code is loaded and executed by a processor to implement the method for monitoring radio links described above.

In the embodiments of the present disclosure, for a wireless terminal with two radio links, based on the monitoring information of monitoring beacons of two radio links, the monitoring frequency of monitoring beacons of at least one radio link is reduced, thus the times of monitoring beacons of the wireless terminal can be reduced, and the power consumption of monitoring beacons of the wireless terminal can be reduced.

### BRIEF DESCRIPTION OF THE DRAWINGS

FIG. 1 illustrates a schematic structural diagram of a wireless terminal according to an alternative embodiment of the present disclosure.
FIG. 2 illustrates a schematic diagram of communication of radio links according to an alternative embodiment of the present disclosure.
FIG. 3 illustrates a schematic diagram of monitoring beacons according to an alternative embodiment of the present disclosure.
FIG. 4 illustrates a schematic diagram of monitoring beacons according to an alternative embodiment of the present disclosure.
FIG. 5 illustrates a flowchart of a method for monitoring radio links according to an alternative embodiment of the present disclosure.
FIG. 6 illustrates a flowchart of a method for monitoring radio links according to an alternative embodiment of the present disclosure.
FIG. 7 illustrates a schematic diagram of monitoring beacons according to an alternative embodiment of the present disclosure.
FIG. 8 illustrates a schematic diagram of monitoring beacons according to an alternative embodiment of the present disclosure.
FIG. 9 illustrates a schematic diagram of monitoring beacons according to an alternative embodiment of the present disclosure.
FIG. 10 illustrates a flowchart of a method for monitoring radio links according to an alternative embodiment of the present disclosure.
FIG. 11 illustrates a flowchart of a method for monitoring radio links according to an alternative embodiment of the present disclosure.
FIG. 12 illustrates a flowchart of a method for monitoring radio links according to an alternative embodiment of the present disclosure.
FIG. 13 illustrates a structural block diagram of an apparatus for monitoring radio links according to an alternative embodiment of the present disclosure.

### DETAILED DESCRIPTION

In order to provide a clearer understanding of the purpose, technical solutions, and advantages of the present disclosure, detailed descriptions of embodiments of the present disclosure will be provided below in conjunction with the accompanying drawings.

In this document, the term "multiple" refers to two or more. The term "and/or" describes the relationship between associated objects and indicates that there can be three types of relationships. For example, "A and/or B" can indicate that A exists alone, both A and B exist together, or B exists alone. The character "/" generally represents an "or" relationship between the associated objects.

In the embodiments of the present disclosure, the technical solutions are provided as follows.

A method for monitoring radio links in a wireless terminal is provided and includes:
determining first monitoring information and second monitoring information, the first monitoring information including beacon information of a first radio link and the second monitoring information including beacon information of a second radio link; and
reducing, based on the first monitoring information and the second monitoring information, a monitoring frequency of monitoring beacons of at least one radio link in the first radio link and the second radio link.

In some embodiments, the reducing, based on the first monitoring information and the second monitoring information, a monitoring frequency of monitoring beacons of at least one radio link in the first radio link and the second radio link, includes:
determining a time interval; the time interval being a minimum time difference between a beacon of the first radio link and a beacon of the second radio link; and
reducing, in response to the time interval being less than a preset threshold, the monitoring frequency of monitoring beacons of the at least one radio link in the first radio link and the second radio link.

In some embodiments, the first monitoring information further includes at least one first monitoring time of the first radio link, and the second monitoring information further includes at least one second monitoring time of the second radio link, and the determining a time interval, includes:
determining a first target monitoring time from the at least one first monitoring time;
determining a second target monitoring time with the minimum time interval with the first monitoring time from the at least one second monitoring time; and
determining a time difference between the first target monitoring time and the determined second target monitoring time as the time interval.

In some embodiments, the first monitoring information further includes a monitoring period of the first radio link, and the second monitoring information further includes a monitoring period of the second radio link;
the reducing, in response to the time interval being less than a preset threshold, the monitoring frequency of monitoring beacons of the at least one radio link in the first radio link and the second radio link, includes:
reducing, in response to the time interval being less than a first preset threshold and the monitoring periods of the first radio link and the second radio link being the same, the monitoring frequencies of monitoring beacons of the first radio link and the second radio link; and
reducing, in response to the time interval being less than a second preset threshold and the monitoring periods of the first radio link and the second radio link being different, the monitoring frequency of the radio link with higher monitoring frequency among the first radio link and the second radio link.

In some embodiments, the reducing the monitoring frequencies of monitoring beacons of the first radio link and the second radio link, includes:
expanding the monitoring periods of the first radio link and the second radio link; and
monitoring the first radio link and the second radio link alternately.

In some embodiments, each of the first preset threshold and the second preset threshold is positively correlated with the monitoring periods of the first radio link and the second radio link.

In some embodiments, the method further includes:
monitoring beacons in the first radio link and the second radio link;
waking up the corresponding radio link in response to one of the beacons; and
receiving downlink data through the woken-up radio link.

In some embodiments, a frequency of the first radio link is different from that of the second radio link.

In some embodiments, a frequency of the first radio link is the same as that of the second radio link.

In some embodiments, the first radio link is a 2.4G radio link and the second radio link is a 5G radio link.

In the embodiments of the present disclosure, for a wireless terminal with two radio links, based on the monitoring information of monitoring beacons of the two radio links, the monitoring frequency of monitoring beacons of at least one radio link is reduced, thus the times of monitoring beacons of the wireless terminal can be reduced, and the power consumption of monitoring beacons of the wireless terminal can be reduced.

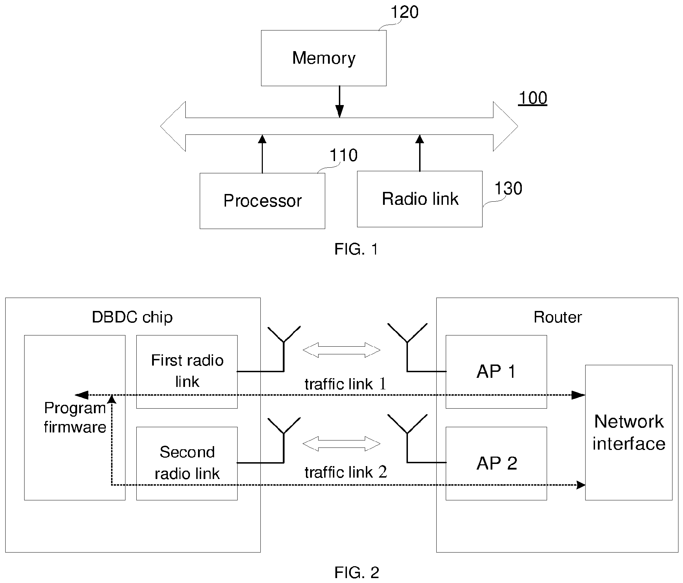

As illustrated in FIG. 1, which illustrates a structural block diagram of a wireless terminal 100 according to an alternative embodiment of the present disclosure. In some embodiments, the wireless terminal 100 may be a wireless terminal capable of accessing a wireless local area network (WLAN) as a wireless station, such as a smartphone, a tablet, a wearable device, and the like. The wireless terminal 100 of the present disclosure includes at least one or more of the following components: a processor 110, a memory 120, and at least two radio links 130.

In some embodiments, the processor 110 includes one or more processing cores. The processor 110 uses various interfaces and lines to connect various parts within the wireless terminal 100 and executes various functions and processes data of the wireless terminal 100 by running or executing program codes stored in the memory 120 and calling data stored in the memory 120. In some embodiments, the processor 110 is implemented in at least one hardware form of digital signal processing (DSP), field-programmable gate array (FPGA), and programmable logic array (PLA). The processor 110 may integrate one or more of a central processing unit (CPU), a graphics processing unit (GPU), a neural-network processing unit (NPU), and a modem. The CPU is mainly configured to handle operating systems, user interfaces, and applications. The GPU is configured to render and draw the content required by a display screen. The NPU is configured to implement artificial intelligence (Al) functions. The modem is configured to perform wireless communication processing. It is understood that the modem can be implemented separately through a chip without being integrated into the processor 110.

In some embodiments, the processor 110 is configured to control working conditions of the at least two radio links 130, and correspondingly, the processor 110 is a processor integrated with a wireless fidelity (Wi-Fi) chip. The Wi-Fi chip is a chip with dual Wi-Fi processing capabilities. In some embodiments, the Wi-Fi chip may be a dual band dual concurrent (DBDC) chip or a dual band simultaneous (DBS) chip.

In some embodiments, the memory 120 includes a random access memory (RAM). In other embodiments, the memory 120 includes a read-only memory (ROM). In some embodiments, the memory 120 includes a non-transitory computer-readable storage medium. The memory 120 is configured to store program codes. The memory 120 may include a storage program area and a storage data area. The storage program area may store instructions for implementing an operating system, instructions for at least one function (such as a touch function, a sound playing function, an image playing function, etc.), instructions for implementing various method embodiments described below, etc. The storage data area may store data (such as audio data, phone book) created according to the use of the wireless terminal 100 and the like.

In some embodiments, the memory 120 stores different receiving schemes for receiving beacons of radio links 130 and stores identifications of different access points (APs) connected by different radio links 130, and identifications of the radio links.

The at least two radio links 130 are configured to connect different APs and receive downlink data from the APs. The different APs are APs in the same router or in different routers.

In some embodiments, the wireless terminal 100 further includes a display screen. The display screen is a display component configured to display a user interface. In some embodiments, the display screen is a touch screen that allows users to perform touch operations on the display screen using their fingers, stylus, or any other suitable object. In some embodiments, the display screen is typically located on a front panel of the wireless terminal 100. In some embodiments, the display screen is designed to be a full-screen display, a curved screen, an irregular-shaped screen, a double-sided screen, or a foldable screen. In some embodiments, the display screen is designed to be a combination of a full-screen display and a curved screen, a combination of an irregular-shaped screen and a curved screen, and so on, without limitation in this embodiment.

In addition, those skilled in the art can understand that the structure of the wireless terminal 100 illustrated in the accompanying drawings does not limit the wireless terminal 100. The wireless terminal 100 may include more or fewer components than illustrated in the drawings, or certain components may be combined or arranged differently. In some embodiments, the wireless terminal 100 may further include a microphone, a speaker, an input unit, a sensor, an audio circuit, a module, a power supply, a Bluetooth module, and other components, which are not further described here.

To improve the throughput of radio links and reduce network latency in the wireless terminal, a dual-band Wi-Fi acceleration method is typically adopted to enable the wireless terminal to connect to two APs simultaneously. As illustrated in FIG. 2, a wireless terminal integrated with a DBDC chip connects to different APs in a router through two radio links via different traffic links.

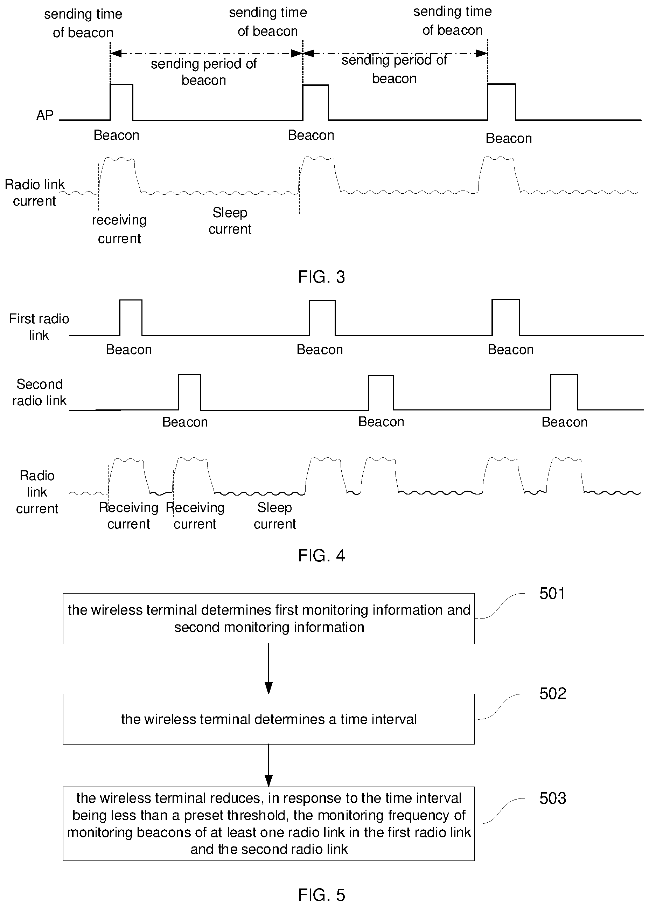

After the wireless terminal is connected to the AP, data exchange between the wireless terminal and the AP is not required for most of the time. During the time when there is no data exchange between the wireless terminal and the AP, the AP periodically sends a beacon to the wireless terminal. This beacon is used to indicate whether the AP has any downlink data to send to the wireless terminal. Therefore, to save power, the radio link of the wireless terminal is always in a sleep state, i.e., power save state, the wireless terminal wakes up the radio link only when it receives the beacon that indicates that the router has the downlink data to send to the wireless terminal. As illustrated in FIG. 3, the wireless terminal generates a receiving current at the time corresponding to each beacon, and receives the beacon through the receiving current. Therefore, the power consumption of the wireless terminal in the time without data interaction depends on three factors: the sleep current of the chip after the radio link is turned off, the receiving current of the beacon and the receiving processing time of the beacon.

In the related art, when a wireless terminal connects two APs, according to the protocol, two radio links on the DBDC chip respectively monitor beacons according to the beacon transmission periods of the APs to which they are connected. As illustrated in FIG. 4, two radio links wake up to monitor beacons at their respective monitoring moments. In this way, the wireless terminal needs to monitor beacons of two links, which causes the power consumption of the wireless terminal to increase under this monitoring mechanism.

In the embodiment of the present disclosure, for a wireless terminal with two radio links, based on the monitoring information of monitoring beacons of two radio links, the monitoring frequency of monitoring beacons of at least one radio link is reduced, thus the times of monitoring beacons of the wireless terminal can be reduced, and the power consumption of monitoring beacons of the wireless terminal can be reduced.

The wireless terminal determines different monitoring frequency reduction methods according to different monitoring decision information. In the embodiment, the method that the wireless terminal determines the reduction of monitoring frequency based on a time interval is taken as an example. As illustrated in FIG. 5, which illustrates a flowchart of a method for monitoring radio links according to an alternative embodiment of the present disclosure. An execution subject in the embodiment of the present disclosure can be the wireless terminal 100, the embodiment of the present disclosure is executed by the processor 110 in the wireless terminal 100 and is realized by an operating system in the wireless terminal 100, and the embodiment is described by taking the wireless terminal 100 as an example. The method includes the following blocks.

At block 501, the wireless terminal determines first monitoring information and second monitoring information.

The first monitoring information includes beacon information of a first radio link and the second monitoring information includes beacon information of a second radio link. The first radio link and the second radio link are two radio links in the same wireless terminal. Moreover, the first radio link and the second radio link are radio links corresponding to the same frequency or different frequencies. In some embodiments, the frequency of the first radio link is different from that of the second radio link. The first radio link and the second radio link are radio links with frequencies of 2.4GHz, 5GHz and 6GHz.

The first monitoring information and the second monitoring information are related to the APs to which the wireless terminal is connected. In some embodiments, the wireless terminal measures the first monitoring information of the first radio link and the second monitoring information of the second radio link every time the corresponding radio link is switched from a starting state to a closed state. In some embodiments, for the same AP, when the wireless terminal connects to the AP for the first time, it starts to measure the monitoring information of the AP, so as to obtain the first monitoring information of the first link and the second monitoring information of the second link. After the wireless terminal switches the first radio link and the second radio link, the first monitoring information and the second monitoring information of the connected APs are re-measured. Accordingly, the wireless terminal can store the point identifier of the AP and the monitoring information correspondingly. In response to the radio link of the wireless terminal being in the closed state, the wireless terminal determines the point identifier of the currently connected AP, and determines the monitoring information from the corresponding relationship between the stored point identifier and the monitoring information according to the point identifier.

It should be noted that the first monitoring information and the second monitoring information are monitoring information obtained by the wireless terminal monitoring its own radio links. Alternatively, the first monitoring information and the second monitoring information are monitoring information of radio links of other wireless terminals obtained by the wireless terminal. In the embodiment of the present disclosure, this is not specifically limited. Accordingly, in response to the first monitoring information and the second monitoring information being monitoring information of radio links of other wireless terminals, the wireless terminal receives the first monitoring information and the second monitoring information sent by other wireless terminals. The process for other wireless terminals to obtain the first monitoring information of the first link and the second monitoring information of the second link is similar to the process for the wireless terminal to obtain the first monitoring information of the first link and the second monitoring information of the second link through measurement, thus the details are not repeated here.

In some embodiments, the first monitoring information includes at least one first monitoring time of the first radio link, and the second monitoring information includes at least one second monitoring time of the second radio link. Accordingly, the wireless terminal respectively measures at least one monitoring time of the first radio link and at least one monitoring time of the second radio link. For each radio link, the wireless terminal records the time that the radio link monitors to the beacon, and determines the historical monitoring time of each radio link as the monitoring information of the radio link.

It should be noted that the first radio link and the second radio link connect different APs of the same wireless access device, or the first radio link and the second radio link connect APs of different wireless access devices. In the embodiment of the present disclosure, this is not specifically limited.

At block 502, the wireless terminal determines a time interval.

The time interval is the minimum time difference between the beacon of the first radio link and the beacon of the second radio link.

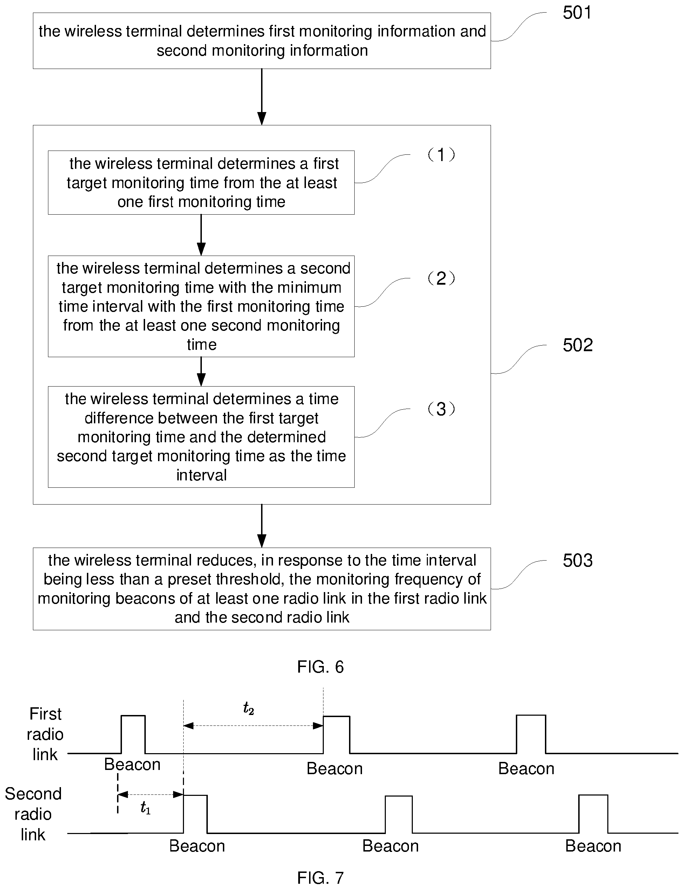

In some embodiments, the first monitoring information includes at least one first monitoring time of the first radio link, and the second monitoring information includes at least one second monitoring time of the second radio link. Accordingly, as illustrated in FIG. 6, this block is realized by the following blocks (1)-(3).

At block (1), the wireless terminal determines a first target monitoring time from the at least one first monitoring time.

In this block, the wireless terminal randomly determines the first target monitoring time from the at least one first monitoring time.

At block (2), the wireless terminal determines a second target monitoring time with the minimum time interval with the first monitoring time from the at least one second monitoring time.

In this block, the wireless terminal sorts the at least one first monitoring time and at least one second monitoring time to obtain a monitoring time sorting result, and determines second monitoring time with the minimum time difference with the first target monitoring time from the monitoring time sorting result, and determines this second monitoring time as the second target monitoring time.

At block (3), the wireless terminal determines a time difference between the first target monitoring time and the determined second target monitoring time as the time interval.

It should be noted that the wireless terminal can determine the second target monitoring time, and then determine the first target monitoring time from at least one first monitoring time. In this embodiment of the present disclosure, this is not specifically limited.

In the embodiment, the wireless terminal takes the time interval of monitoring beacons as monitoring decision information, thus preventing misjudgment caused by inaccurate determined time interval.

In some embodiments, the wireless terminal determines multiple groups of adjacent first and second monitoring times from at least one first monitoring time and at least one second monitoring time, and determines the time interval of each group of adjacent first and second monitoring times to obtain multiple groups of time intervals, from which the minimum time interval is determined as the time interval for the wireless terminal to monitor beacons. For each radio link, the monitoring time is periodic. Therefore, at least two kinds of time intervals are included in the multiple groups of time intervals. In some embodiments, as illustrated in FIG. 7, in the case of the same monitoring period, for the same first monitoring time on the first radio link, there are two second monitoring times adjacent to it on the second radio link, thus two time intervals *t*₁ and *t*₂ are obtained, and *t*₁ < *t*₂. Therefore, *t*₁ is taken as the time interval of monitoring beacons for the wireless terminal.

In the embodiment, by determining the multiple groups of adjacent first monitoring time and second monitoring time, the minimum time interval among the multiple groups of time intervals is determined as the time interval for the wireless terminal to monitor beacons, thereby preventing misjudgment caused by inaccurate determined time intervals.

At block 503, the wireless terminal reduces, in response to the time interval being less than a preset threshold, the monitoring frequency of monitoring beacons of at least one radio link in the first radio link and the second radio link.

In this block, the wireless terminal determines whether to adjust the monitoring frequency according to the time interval of monitoring beacons of the wireless terminal. In some embodiments, in response to the time interval being less than a first preset threshold, the wireless terminal reduces the monitoring frequency of monitoring beacons of the first radio link or the second radio link.

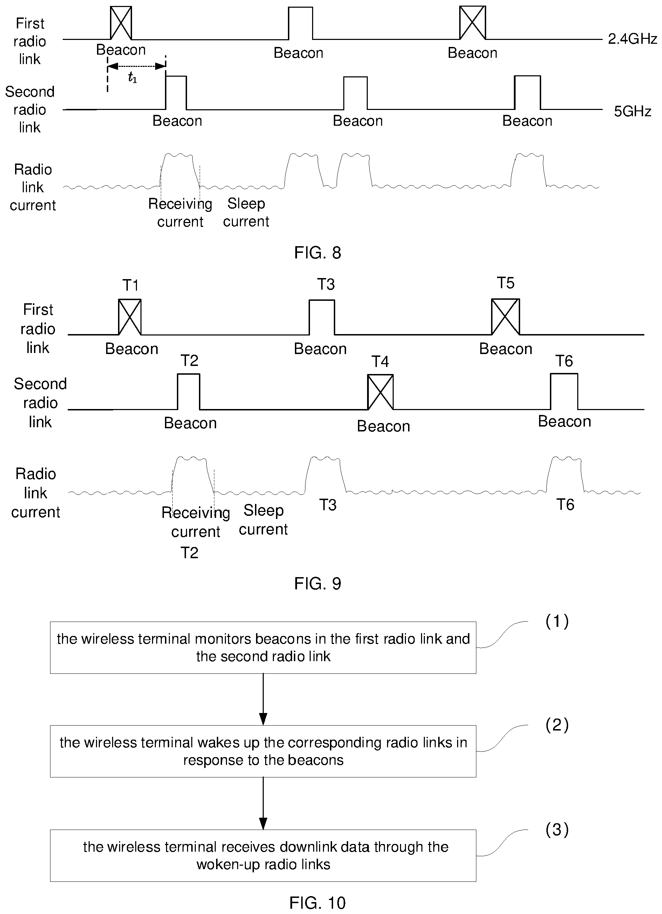

In some embodiments, the wireless terminal can randomly reduce the monitoring frequency of monitoring beacons of any radio link in the first radio link and the second radios link. In other embodiments, a transmission rate of the first radio link is different from that of the second radio link. As illustrated in FIG. 8, the wireless terminal determines the radio link with lower transmission rate from the first radio link and the second radio link, and reduces the monitoring frequency of this radio link. In some embodiments, the first radio link is a 2.4GHz radio link and the second radio link is a 5GHz radio link. Since the transmission rate of the 2.4GHz radio link is 1 Mbps and the transmission rate of the 5GHz radio link is 6Mbps, the wireless terminal reduces the monitoring frequency of the first radio link of 2.4GHz.

In the embodiment, because of the low transmission rate of the radio link with low transmission rate, the wireless terminal receives beacons for a long time, resulting in high monitoring power consumption, therefore the radio link with low transmission rate is selected to adjust the monitoring frequency, the monitoring frequency of this radio link is reduced, and the monitoring power consumption of the radio link is reduced.

In some embodiments, in response to the time interval being less than a second preset threshold, the wireless terminal reduces the monitoring frequencies of monitoring beacons of the first radio link and the second radio link.

In the embodiment, the wireless terminal reduces the monitoring frequencies of the two radio links. It should be noted that the wireless terminal can adjust the monitoring times of the first radio link and the second radio link according to the different monitoring times of the first radio link and the second radio link after reducing the frequencies of the two radio links. The wireless terminal expands the monitoring periods of the first radio link and the second radio link, and monitors the first radio link and the second radio link alternately. In each group of first monitoring time and second monitoring time corresponding to the time interval, one monitoring time is reserved to monitor this time period, and in the first monitoring time and second monitoring time corresponding to the next group of time intervals, the radio link that is not monitored last time is set as the radio link that is monitored. In some embodiments, as illustrated in FIG. 9, in the first group of first monitoring time T1 and second monitoring time T2, monitoring is performed at the second monitoring time T2; In the second group of first monitoring time T3 and second monitoring time T4, monitoring is performed at the first monitoring time T3; In the third group of the first monitoring time T5 and the second monitoring time T6, monitoring is performed at the second monitoring time T6.

It should be noted that the wireless terminal can reduce the monitoring frequencies of the first radio link and the second radio link by reducing the same amplitude, or the wireless terminal can reduce the first amplitude of the first radio link and reduce the second amplitude of the second radio link. In this embodiment, this is not specifically limited.

In this embodiment, for each group of the first monitoring time and the second monitoring time, the first monitoring time and the second monitoring time are alternately determined as the monitoring time, which prevents the problem that the time error of waking up the radio link is large due to the fact that the monitoring frequency is reduced at the same time and the monitoring is not performed for a long time.

It should be noted that the first preset threshold and the second preset threshold are the same or different, and the first preset threshold and the second preset threshold are set as required. In this embodiment of the present disclosure, the first preset threshold and the second preset threshold are not specifically limited. In some embodiments, the first preset threshold or the second preset threshold is 10ms, 15ms, 30ms, etc. In addition, the first preset threshold and the second preset threshold can be determined according to the monitoring periods of the first radio link and the second radio link. The first preset threshold and the second preset threshold are positively correlated with the monitoring period of the first radio link and the monitoring period of the second radio link, specifically, the first preset threshold is positively correlated with the monitoring period of the first radio link and the monitoring period of the second radio link, and the second preset threshold is also positively correlated with the monitoring period of the first radio link and the monitoring period of the second radio link. In some embodiments, the first preset threshold and the second preset threshold are positively correlated with the larger monitoring period in the monitoring periods of the first radio link and the second radio link. Accordingly, the wireless terminal determines the larger monitoring period in the monitoring periods of the first radio link and the second radio link, and determines the first preset threshold or the second preset threshold according to the larger monitoring period.

Another point to note is that in response to the time interval being not less than the preset threshold, the wireless terminal keeps the monitoring frequencies of monitoring beacons of the first radio link and the second radio link.

After the wireless terminal reduces the monitoring frequency of at least one of the first radio link and the second radio link, it monitors the beacons based on the adjusted monitoring frequency of the first radio link and the second radio link, so as to obtain the downlink data sent by the AP in time. As illustrated in FIG. 10, this process is realized by the following blocks (1)-(3).

At block (1), the wireless terminal monitors beacons in the first radio link and the second radio link.

In this block, based on the adjusted monitoring frequency, the wireless terminal temporarily wakes up the radio link at the corresponding monitoring time to generate a receiving current, and receives the beacon sent by the AP through the receiving current.

At block (2), the wireless terminal wakes up the corresponding radio links in response to the beacons.

In this block, the wireless terminal determines the radio link corresponding to receiving the beacon and wakes up the radio link.

At block (3), the wireless terminal receives downlink data through the woken-up radio links.

The downlink data sent by the AP corresponding to the beacon is received.

It should be noted that in some embodiments, the wireless terminal determines whether to wake up the first radio link and the second radio link based on the beacons corresponding to the first radio link and the second radio link. In other embodiments, the wireless terminal wakes up both the first radio link and the second radio link after receiving a beacon indicating wake-up in any radio link. In the embodiment of the present disclosure, this is not specifically limited.

In the embodiment of the present disclosure, for a wireless terminal with two radio links, based on the monitoring information of monitoring beacons of the two radio links, the monitoring frequency of monitoring beacons of at least one radio link is reduced, thus the times of monitoring beacons of the wireless terminal can be reduced, and the power consumption of monitoring beacons of the wireless terminal can be reduced.

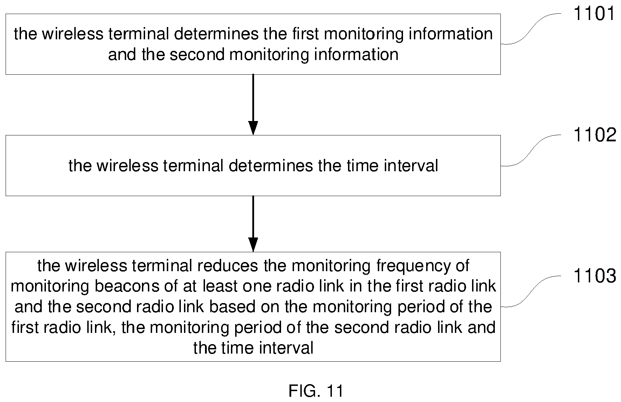

In the embodiment, the wireless terminal determines the monitoring frequency reduction method based on the time interval, the monitoring period of the first radio link and the monitoring period of the second radio link. As illustrated in FIG. 11, which illustrates a flowchart of a method for monitoring radio links according to an alternative embodiment of the present disclosure. An execution subject in the embodiment of the present disclosure can be the wireless terminal 100, the embodiment of the present disclosure is executed by the processor 110 in the wireless terminal 100 and is realized by an operating system in the wireless terminal 100, and this embodiment will be described by taking the wireless terminal 100 as an example. In the embodiment of the present disclosure, the method includes the following blocks.

At block 1101: the wireless terminal determines the first monitoring information and the second monitoring information.

This block is similar to the block 501 and is not described here.

At block 1102: the wireless terminal determines the monitoring period of the first radio link, the monitoring period of the second radio link and the time interval.

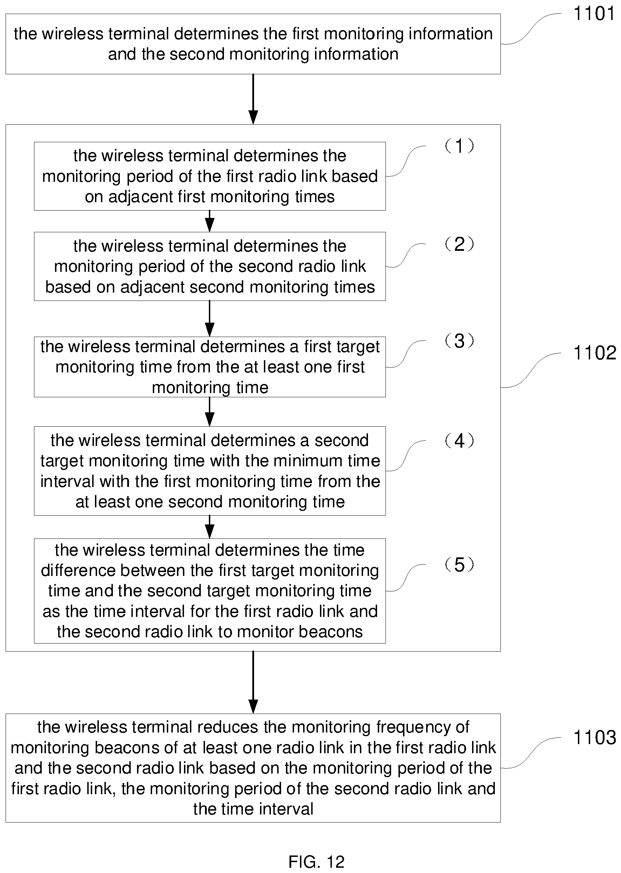

The first monitoring information includes at least one first monitoring time of the first radio link, and the second monitoring information includes at least one second monitoring time of the second radio link. Accordingly, before this block, the wireless terminal determines the monitoring period of the first radio link, the monitoring period of the second radio link and the time interval. As illustrated in FIG. 12, this block is realized through the following blocks (1)-(5).

At block (1), the wireless terminal determines the monitoring period of the first radio link based on adjacent first monitoring times.

The wireless terminal determines two adjacent first monitoring times from at least one first monitoring time, and determines the time difference between the two first monitoring times as the monitoring period of the first radio link.

At block (2), the wireless terminal determines the monitoring period of the second radio link based on adjacent second monitoring times.

This block is similar to the block (1) in the block 1002 and is not described here.

At block (3), the wireless terminal determines a first target monitoring time from the at least one first monitoring time.

This block is similar to the block (1) in the block 502 and is not described here.

At block (4), the wireless terminal determines a second target monitoring time with the minimum time interval with the first monitoring time from the at least one second monitoring time.

This block is similar to the block (2) in the block 502 and is not described here.

At block (5), the wireless terminal determines the time difference between the first target monitoring time and the second target monitoring time as the time interval for the first radio link and the second radio link to monitor beacons.

This block is similar to the block (3) in the block 502 and is not described here.

The process for the wireless terminal to obtain the at least one first monitoring time and at least one second monitoring time is similar to that for the wireless terminal to obtain the at least one first monitoring time and at least one second monitoring time in the block 502, thus the details are not repeated here.

At block 1103: the wireless terminal reduces the monitoring frequency of monitoring beacons of at least one radio link in the first radio link and the second radio link based on the monitoring period of the first radio link, the monitoring period of the second radio link and the time interval.

In some embodiments, in response to the time interval being less than a preset threshold and the monitoring periods of the first radio link and the second radio link being the same, the wireless terminal reduces the monitoring frequency of monitoring beacons of the first radio link or the second radio link.

In this embodiment, when the monitoring periods of the first radio link and the second radio link are the same, the wireless terminal determines whether the time interval is less than the preset threshold, and if so, the wireless terminal reduces the monitoring frequency of monitoring beacons of the first radio link or the second radio link. The wireless terminal randomly reduces the monitoring frequency of the first radio link or the second radio link, or determines a radio link with a smaller transmission rate from the first radio link and the second radio link to reduce the monitoring frequency of this radio link. The process for the wireless terminal to reduce the monitoring frequency of the first radio link or the second radio link is similar to that of the wireless terminal to reduce the monitoring frequency of the first radio link or the second radio link in the block 503, thus the details are not repeated here.

In some embodiments, in response to the time interval being less than a preset threshold and the monitoring periods of the first radio link and the second radio link being the same, the wireless terminal reduces the monitoring frequencies of monitoring beacons of the first radio link and the second radio link.

In this embodiment, when the monitoring periods of the first radio link and the second radio link are the same, the wireless terminal determines whether the time interval is less than a preset threshold, and if so, the wireless terminal reduces the monitoring frequencies of monitoring beacons of the first radio link and the second radio link. The wireless terminal expands the monitoring periods of the first radio link and the second radio link, and alternately monitors the first radio link and the second radio link. This process is similar to that in the block 503, in which the wireless terminal simultaneously expands the monitoring frequencies of the first radio link and the second radio link, and is not described in detail here.

In some embodiments, in response to the time interval being less than a preset threshold and the monitoring periods of the first radio link and the second radio link being different, the wireless terminal reduces the monitoring frequency of the radio link with higher monitoring frequency among the first radio link and the second radio link.

In this embodiment, the wireless terminal reduces the monitoring frequency of the radio link with higher frequency and maintains the monitoring frequency of another radio link. In some embodiments, the monitoring frequency of the first radio link is 5 times per second, that is, the monitoring period is 200ms. The monitoring frequency of the second radio link is 10 times per second, that is, the monitoring period is 100ms. The wireless terminal determines to reduce the monitoring frequency of the second radio link.

After the wireless terminal reduces the monitoring frequency of at least one of the first radio link and the second radio link, it monitors the beacons based on the adjusted monitoring frequencies of the first radio link and the second radio link. This process is similar to the blocks (1)-(2) in the block 503 and is not described here.

In the embodiment of the present disclosure, for a wireless terminal with two radio links, based on the monitoring information of monitoring beacons of the two radio links, the monitoring frequency of monitoring beacons of at least one radio link is reduced, thus the times of the wireless terminal monitoring the beacons can be reduced, and the power consumption of the wireless terminal monitoring the beacons can be reduced.

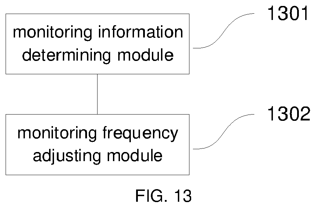

As illustrated in FIG. 13, which illustrates a structural block diagram of an apparatus for monitoring radio links according to an alternative embodiment of the present disclosure. The apparatus for monitoring radio links can be realized as all or a part of the processor 110 by software, hardware or a combination of both. The apparatus includes the following modules.

A monitoring information determining module 1301 is configured to determine first monitoring information and second monitoring information, the first monitoring information includes beacon information of a first radio link and the second monitoring information includes beacon information of a second radio link.

A monitoring frequency adjusting module 1302 is configured to reduce, based on the first monitoring information and the second monitoring information, a monitoring frequency of monitoring beacons of at least one radio link in the first radio link and the second radio link.

In some embodiments, the monitoring frequency adjusting module 1302 includes the following units.

A first determining unit is configured to determine a time interval. The time interval is a minimum time difference between a beacon of the first radio link and a beacon of the second radio link.

A monitoring frequency adjusting unit is configured to reduce, in response to the time interval being less than a preset threshold, the monitoring frequency of monitoring beacons of the at least one radio link in the first radio link and the second radio link.

In some embodiments, the first monitoring information further includes at least one first monitoring time of the first radio link, and the second monitoring information further includes at least one second monitoring time of the second radio link.

The first determining unit is configured to determine a first target monitoring time from the at least one first monitoring time; determine a second target monitoring time with the minimum time interval with the first monitoring time from the at least one second monitoring time; and determine a time difference between the first target monitoring time and the determined second target monitoring time as the time interval.

In some embodiments, the first monitoring information further includes a monitoring period of the first radio link, and the second monitoring information further includes a monitoring period of the second radio link.

The monitoring frequency adjusting unit is configured to reduce, in response to the time interval being less than a first preset threshold and the monitoring periods of the first radio link and the second radio link being the same, the monitoring frequencies of monitoring beacons of the first radio link and the second radio link; and reduce, in response to the time interval being less than a second preset threshold and the monitoring periods of the first radio link and the second radio link being different, the monitoring frequency of the radio link with higher monitoring frequency among the first radio link and the second radio link.

In some embodiments, the monitoring frequency adjusting unit is configured to: expand the monitoring periods of the first radio link and the second radio link; and monitor the first radio link and the second radio link alternately.

In some embodiments, each of the first preset threshold and the second preset threshold is positively correlated with the monitoring periods of the first radio link and the second radio link.

In some embodiments, the apparatus further includes:
a monitoring module, configured to monitor beacons in the first radio link and the second radio link;
a waking up module, configured wake up the corresponding radio link in response to each beacon; and
a receiving module, configured to receive downlink data through the woken-up radio link.

In some embodiments, a frequency of the first radio link is different from that of the second radio link.

In some embodiments, a frequency of the first radio link is the same as that of the second radio link.

In some embodiments, the first radio link is a 2.4G radio link and the second radio link is a 5G radio link.

In the embodiments of the present disclosure, for a wireless terminal with two radio links, based on the monitoring information of monitoring beacons of two radio links, the monitoring frequency of monitoring beacons of at least one radio link is reduced, thus the times of monitoring beacons of the wireless terminal can be reduced, and the power consumption of monitoring beacons of the wireless terminal can be reduced.

An embodiment of the present disclosure further provides a computer-readable medium, which stores at least one program code, and the at least one program code is loaded and executed by a processor to implement the method for monitoring radio links as described in the above embodiments.

An embodiment of the present disclosure further provides a computer program product, which stores at least one program code, and the at least one program code is loaded and executed by a processor to implement the method for monitoring radio links as described in the above embodiments.

Those skilled in the art should be able to realize that in one or more of the above embodiments, the functions described in the embodiments of the present disclosure can be realized by hardware, software, firmware or any combination thereof. When implemented in software, these functions can be stored in a computer-readable medium or transmitted as one or more instructions or codes on the computer-readable medium. Computer-readable media include computer storage media and communication media, where communication media includes any media that facilitates the transfer of computer programs from one place to another. A storage medium is any available medium that can be accessed by a general-purpose or special-purpose computer.

The above is only illustrated embodiments of the present disclosure, and it is not used to limit the present disclosure. Any modification, equivalent substitution, improvement, etc. made within the spirit and principle of the present disclosure should be included in the scope of protection of the present disclosure.

## Claims

1. A method for monitoring radio links in a wireless terminal, comprising:
determining first monitoring information and second monitoring information, wherein the first monitoring information comprises beacon information of a first radio link and the second monitoring information comprises beacon information of a second radio link; and
reducing, based on the first monitoring information and the second monitoring information, a monitoring frequency of monitoring beacons of at least one radio link in the first radio link and the second radio link.

2. The method according to claim 1, wherein the reducing, based on the first monitoring information and the second monitoring information, a monitoring frequency of monitoring beacons of at least one radio link in the first radio link and the second radio link comprises:
determining a time interval; wherein the time interval is a minimum time difference between a beacon of the first radio link and a beacon of the second radio link; and
reducing, in response to the time interval being less than a preset threshold, the monitoring frequency of monitoring beacons of the at least one radio link in the first radio link and the second radio link.

3. The method according to claim 2, wherein the first monitoring information further comprises at least one first monitoring time of the first radio link, and the second monitoring information further comprises at least one second monitoring time of the second radio link, and the determining a time interval, comprises:
determining a first target monitoring time from the at least one first monitoring time;
determining a second target monitoring time with a minimum time interval with the first monitoring time from the at least one second monitoring time; and
determining a time difference between the first target monitoring time and the determined second target monitoring time as the time interval.

4. The method according to claim 3, wherein the first monitoring information further comprises a monitoring period of the first radio link, and the second monitoring information further comprises a monitoring period of the second radio link;
wherein the reducing, in response to the time interval being less than a preset threshold, the monitoring frequency of monitoring beacons of the at least one radio link in the first radio link and the second radio link, comprises:
reducing, in response to the time interval being less than a first preset threshold and the monitoring periods of the first radio link and the second radio link being the same, the monitoring frequencies of monitoring beacons of the first radio link and the second radio link; and
reducing, in response to the time interval being less than a second preset threshold and the monitoring periods of the first radio link and the second radio link being different, the monitoring frequency of the radio link with higher monitoring frequency among the first radio link and the second radio link.

5. The method according to claim 4, wherein the reducing the monitoring frequencies of monitoring beacons of the first radio link and the second radio link comprises:
expanding the monitoring periods of the first radio link and the second radio link; and
monitoring the first radio link and the second radio link alternately.

6. The method according to claim 4, wherein each of the first preset threshold and the second preset threshold is positively correlated with the monitoring periods of the first radio link and the second radio link.

7. The method according to any one of claims 1-6, further comprising:
monitoring beacons in the first radio link and the second radio link;
waking up the corresponding radio links in response to the beacons; and
receiving downlink data through the woken-up radio links.

8. The method according to claim 1, wherein a frequency of the first radio link is different from that of the second radio link.

9. The method according to claim 1, wherein a frequency of the first radio link is the same as that of the second radio link.

10. The method according to claim 8, wherein the first radio link is a 2.4G radio link and the second radio link is a 5G radio link.

11. An apparatus for monitoring radio links in a wireless terminal, comprising:
a monitoring information determining module, configured to determine first monitoring information and second monitoring information, wherein the first monitoring information comprises beacon information of a first radio link and the second monitoring information comprises beacon information of a second radio link; and
a monitoring frequency adjusting module, configured to reduce, based on the first monitoring information and the second monitoring information, a monitoring frequency of monitoring beacons of at least one radio link in the first radio link and the second radio link.

12. The apparatus according to claim 11, wherein the monitoring frequency adjusting module comprises:
a first determining unit, configured to determine a time interval; wherein the time interval is a minimum time difference between a beacon of the first radio link and a beacon of the second radio link; and
a monitoring frequency adjusting unit, configured to reduce, in response to the time interval being less than a preset threshold, the monitoring frequency of monitoring beacons of the at least one radio link in the first radio link and the second radio link.

13. The apparatus according to claim 12, wherein the first monitoring information further comprises at least one first monitoring time of the first radio link, the first determining unit is configured to determine a first target monitoring time from the at least one first monitoring time; determine a second target monitoring time with a minimum time interval with the first monitoring time from at least one second monitoring time; and determine a time difference between the first target monitoring time and the determined second target monitoring time as the time interval.

14. The apparatus according to claim 13, wherein the first monitoring information further comprises a monitoring period of the first radio link, and the second monitoring information further comprises a monitoring period of the second radio link;
wherein the monitoring frequency adjusting unit is configured to reduce, in response to the time interval being less than a first preset threshold and the monitoring periods of the first radio link and the second radio link being the same, the monitoring frequencies of monitoring beacons of the first radio link and the second radio link; and reduce, in response to the time interval being less than a second preset threshold and the monitoring periods of the first radio link and the second radio link being different, the monitoring frequency of the radio link with higher monitoring frequency among the first radio link and the second radio link.

15. The apparatus according to claim 14, wherein the monitoring frequency adjusting unit is configured to:
expand the monitoring periods of the first radio link and the second radio link; and
monitor the first radio link and the second radio link alternately.

16. The apparatus according to claim 14, wherein each of the first preset threshold and the second preset threshold is positively correlated with the monitoring periods of the first radio link and the second radio link.

17. The apparatus according to any one of claims 11-16, further comprising:
a monitoring module, configured to monitor beacons in the first radio link and the second radio link;
a waking up module, configured wake up the corresponding radio links in response to the beacons; and
a receiving module, configured to receive downlink data through the woken-up radio links.

18. The apparatus according to claim 11, wherein a frequency of the first radio link is different from that of the second radio link.

19. The apparatus according to claim 11, wherein a frequency of the first radio link is the same as that of the second radio link.

20. The apparatus according to claim 18, wherein the first radio link is a 2.4G radio link and the second radio link is a 5G radio link.

21. A wireless terminal comprising a processor and a memory; wherein the memory stores at least one program code, the at least one program code is configured to be executed by the processor to implement the method for monitoring radio links according to any one of claims 1 to 10.

22. A computer-readable storage medium storing at least one program code, wherein the at least one program code is configured to be executed by a processor to implement the method for monitoring radio links according to any one of claims 1 to 10.

23. A computer program product, wherein the computer program product stores at least one program code, which is loaded and executed by a processor to implement the method for monitoring radio links according to any one of claims 1 to 10.
